# EUROPÄISCHE PATENTSCHRIFT

(11) **EP 1 928 927 B1**
(45) Veröffentlichungstag und Bekanntmachung des Hinweises auf die Patenterteilung: **17.06.2009**
(21) Anmeldenummer: 06777165.9
(22) Anmeldetag: 05.09.2006
(51) Int. Cl.: C08G 18/10, C08G 18/28

(54) **GELMASSEN AUF POLYURETHANBASIS, IHRE HERSTELLUNG UND VERWENDUNG**
POLYURETHANE-BASED GEL MASSES, THEIR PRODUCTION AND USE
MATIERES SOUS FORME DE GELS A BASE DE POLYURETHANNE, LEUR PRODUCTION ET LEUR UTILISATION

(30) Priorität: 16.09.2005 DE 102005044314
(43) Veröffentlichungstag der Anmeldung: 11.06.2008
(73) Patentinhaber: Bayer MaterialScience AG, 51368 Leverkusen (DE)
(72) Erfinder: HOFFMANN, Andreas, 50733 Köln (DE); EBERT, Heinz-Dieter, 51399 Burscheid (DE)
(86) Internationale Anmeldenummer: PCT/EP2006/008636
(87) Internationale Veröffentlichungsnummer: WO 2007/033760

(56) Entgegenhaltungen:
- EP-A1- 0 511 570
- US-A1- 2004 147 707

## Beschreibung

Die vorliegende Erfindung betrifft verbesserte Gelmassen auf Basis eines Reaktionsgemisches aus NCO-Prepolymeren und ausgewählten Verbindungen mit gegenüber Isocyanatgruppen reaktionsfähigen Gruppen, ein Verfahren zur Herstellung dieser Gelmassen und deren Verwendung in druckverteilenden Elementen.

Gelmassen für die Verwendung in druckverteilenden Elementen, z.B. in Polstern für Rollstühle, sind vor allem auf der Basis von Polyvinylchlorid, von Polyorganosiloxanen und von Polyurethanen beschrieben, d.h. Umsetzungsprodukten aus Polyolen und Polyisocyanaten. Besonders vorteilhaft für die gezielte Anpassung der Eigenschaften an den jeweiligen Anwendungszweck haben sich hierbei Gelmassen auf Basis von Polyurethanen erwiesen, wie sie z.B. in EP-A 057 838 beschrieben sind. Solche Polyurethan-Gele, die aus Polyolen mit hohem Molekulargewicht (Hydroxylzahl: 20 bis 112) und Polyisocyanaten erhalten werden können, haben den Nachteil, dass die beiden Reaktionskomponenten in voneinander stark abweichenden Mengen gemischt werden müssen. Dadurch muss bei der maschinellen Herstellung der Gele die Dosierung der in verhältnismäßig kleinen Mengen einzusetzenden Polyisocyanat-Komponente sehr genau und mit geringsten Schwankungen erfolgen, da ansonsten inhomogene Gelmassen mit unterschiedlichen Konsistenzen erhalten werden.

Im Unterschied hierzu werden in EP-A 511 570 Polyurethan-Gelmassen beschrieben, bei denen die Komponenten in einem Mischungsverhältnis eingesetzt werden, welches eine homogene Vermischung der Komponenten, insbesondere beim Einsatz von Hochdruckmaschinen, erlaubt. Die Polyolkomponente besteht aus einem Gemisch von Polyolen mit Hydroxylzahlen kleiner als 112 und Polyolen mit Hydroxylzahlen im Bereich 112 bis 600. Die Isocyanat-Kennzahl des Reaktionsgemisches liegt im Bereich von 15 bis 59,81, und das Produkt aus Isocyanat- und Polyol-Funktionalität beträgt mindestens 6,15. Ein Nachteil dieser Gelmassen ist, dass sicht die mechanischen Eigenschaften nur in engen Grenzen variieren lassen. So kann bei geringer Härte (z.B. Shore 00 < 40) nur ein sehr begrenztes Rückstellvermögen realisiert werden. Als Rückstellvermögen wird die Zeit bezeichnet, welche ein Gel-Formkörper benötigt, um nach einer vertikalen Kompression von 50 % wieder in die Ausgangshöhe zurückzukehren. Das sehr begrenzte Rückstellvermögen schränkt die möglichen Einsatzgebiete solcher Gele in starkem Maße ein.

In EP-A 282 554 werden Haut-freundliche Gelmassen mit inhärenter Klebrigkeit beschrieben, welche beispielsweise in Hautpflastern eingesetzt werden können. Die Gelmassen werden durch Umsetzung von NCO-Prepolymeren (hergestellt durch die Reaktion eines Polyisocyanats mit einem Polyoxyalkylendiol-monoalkylether) und einer hydroxylhaltigen Verbindung, beispielsweise Wasser oder Polyol, erhalten. Bei dem eingesetzten Polyol kann es sich unter anderem um Diole handeln, welche in stöchiometrischer Menge mit dem NCO-Prepolymer umgesetzt werden. Ein Nachteil dieser Gelmassen ist, dass sich die mechanischen Eigenschaften nur in begrenztem Umfang variieren lassen. So erhält man Gelmassen mit geringem Rückstellvermögen bis hin zu Form-Instabilität, wenn man zum Beispiel durch Reduzierung der Kennzahl die Einstellung einer geringen Härte (z.B. Shore 00 < 40) vorzunehmen versucht.

Aufgabe der vorliegenden Erfindung war es daher, Gelmassen zur Verfügung zu stellen, die geringe Härten und ein gutes Rückstellvermögen aufweisen und deren mechanische Eigenschaften in weiten Grenzen variiert werden können. Gleichzeitig soll eine homogene Vermischung der Komponenten beim Einsatz von Hochdruckmaschinen möglich sein, da sich nur auf diese Weise schnelle, reaktive Gel-Systeme verarbeiten lassen.

Überraschenderweise wurden verbesserte Gelmassen gefunden, welche die oben beschriebenen Nachteile nicht aufweisen und die Aufgabe hervorragend lösen.

Gegenstand der Erfindung sind Gelmassen auf Basis eines Reaktionsgemisches aus NCO-Prepolymeren und Polyolkomponenten, welches dadurch gekennzeichnet ist, dass
a) die eingesetzten NCO-Prepolymere aus Polyisocyanaten mit einer Funktionalität von 2,1 bis 5 und Polyoxyalkylendiol-monoalkylethern mit einem Molekulargewicht von 1000 bis 18000 erhältlich sind, wobei das Verhältnis der NCO-Gruppen zu den OH-Gruppen zwischen 2:1 und 8:1 liegt und
b) die Polyolkomponenten eine mittlere Hydroxylzahl von 6 bis 112 und eine formale Funktionalität von 3 bis 8 aufweisen,
wobei die Kennzahl des Reaktionsgemisches im Bereich von 15 bis 60 liegt.

Die erfindungsgemäßen Gelmassen werden durch Umsetzung von NCO-Prepolymeren und Polyolkomponenten hergestellt. Dabei wird das eingesetzte NCO-Prepolymer aus Polyisocyanaten mit einer Funktionalität von 2,1 bis 5 und Polyoxyalkylendiol-monoalkylethern mit einem Molekulargewicht von 1000 bis 18000 hergestellt, wobei das Verhältnis der NCO- zu den OH-Gruppen zwischen 2:1 und 8:1 liegt. Die eingesetzten Polyolkomponenten weisen eine mittlere Hydroxylzahl von 6 bis 112 und eine formale Funktionalität von 3 bis 8 auf. Die Kennzahl des Reaktionsgemisches liegt im Bereich von 15 bis 60. Unter Kennzahl wird das Äquivalentverhältnis von NCO-Gruppen zu OH-Gruppen mulipliziert mit 100 verstanden. So bedeutet z.B. eine. Kennzahl von 15, dass auf eine reaktive OH-Gruppe aus den Polyolen 0,15 reaktive NCO-Gruppen aus den Prepolymeren oder auf eine reaktive NCO-Gruppe aus den Prepolymeren 6,67 reaktive OH-Gruppen aus den Polyolen vorliegen.

Die Komponenten zur Herstellung der erfindungsgemäßen Gelmassen können in einem Mischungsverhältnis eingesetzt werden, welches eine homogene Vermischung der Komponenten, insbesondere beim Einsatz von Hochdruckmaschinen, erlaubt. Durch die Verwendung von Hochdruckmaschinen lassen sich auch schnelle, reaktive Gel-Systeme verarbeiten und somit Gel-Formkörper in hohen Taktzeiten wirtschaftlich herstellen. Darüber hinaus lassen sich die mechanischen Eigenschaften der Gelmassen in weiten Grenzen variieren. So können bei geringer Härte (Shore 00 < 40) gute Rückstellvermögen, wie sie z.B. bei druckverteilenden Auflagen in Antidekubitus-Kissen, Armlehnen, Schuheinlagen, Bürostühlen, Matratzen und Fahrradsätteln gefordert werden, realisiert werden.

Die erfindungsgemäßen Gelmassen sind im Allgemeinen bevorzugt wasserfrei und können gegebenenfalls zusätzlich aus der Polyurethanchemie an sich bekannte Füllstoffe in Mengen von 0 - 50 Gew.-%, bezogen auf das Gesamtgewicht der Gelmasse, enthalten. Die Gelmassen können gegebenenfalls auch Hilfs- und Zusatzstoffe in Mengen von 0 - 25 Gew.-%, bezogen auf die Gelmassen, enthalten. Katalysatoren in Mengen von 0 - 5 Gew.%, bezogen auf die Gelmasse, können gegebenenfalls vorhanden sein.

Gegenstand der vorliegenden Erfindung ist auch ein Verfahren zur Herstellung der Gelmassen, welches dadurch gekennzeichnet ist, dass
a) eine oder mehrere NCO-Prepolymere, welche aus Polyisocyanaten mit einer Funktionalität von 2,1 bis 5 und Polyoxyalkylendiol-monoälkylether mit einem Molekulargewicht von 1000 bis 18000 hergestellt werden, wobei das NCO/OH-Verhältnis zwischen 2:1 und 8:1 liegt, mit
b) einer Polyolkomponente bestehend aus einem oder mehreren Polyolen mit einer mittleren Hydroxylzahl von 6 bis 112 und einer formalen Funktionalität von 3 bis 8, in Gegenwart von
c) gegebenenfalls 0 - 5 Gew.-%, bezogen auf die Gelmasse, eines oder mehrerer Katalysatoren für die Reaktion zwischen Isocyanat- und Hydroxylgruppen und
d) gegebenenfalls 0-50 Gew.-%, bezogen auf die Gelmasse, Füllstoffen, und
e) gegebenenfalls 0 - 25 Gew.-%, bezogen auf die Gelmasse, Hilfs- und/oder Zusatzstoffen
umgesetzt werden,
wobei die Kennzahl des Reaktionsgemisches im Bereich von 15 bis 60 liegt.

Bei den Polyisocyanaten zur Herstellung der Ausgangskomponenten a) handelt es sich vorzugsweise um aliphatische, cycloaliphatische oder aromatische Polyisocyanate. Bevorzugt handelt es sich um bei Raumtemperatur flüssige Di- und/oder Polyisocyanate der Diphenylmethanreihe. Hierzu gehören bei Raumtemperatur flüssige und gegebenenfalls entsprechend modifizierte Gemische von 4,4'-Diisocyanatodiphenylmethan mit 2,4'- und gegebenenfalls 2,2'-Diisocyanatodiphenylmethan. Gut geeignet sind auch bei Raumtemperatur flüssige Polyisocyanatgemische der Diphenylmethanreihe, die neben den genannten Isomeren deren höheren Homologe enthalten und die in an sich bekannter Weise durch Phosgenierung von Anilin/Formaldehyd-Kondensaten zugänglich sind. Auch Urethan- und/oder Carbodiimidgruppen aufweisende Modifizierungsprodukte dieser Di- und Polyisocyanate sind geeignet. Auch Allophanat- bzw. Biuretgruppen aufweisende Modifizierungsprodukte der genannten Di- und Polyisocyanate sind geeignet. Die Polyisocyanatkomponente weist eine mittlere NCO-Funktionalität von 2,1 bis 5,0, vorzugsweise 2,5 bis 3,1 auf.

Bei den Polyoxyalkylendiol-monoalkylethern zur Herstellung der Ausgangskomponenten a) handelt es sich um Poly(oxyalkylen)polyole, welche auf an sich bekannte Weise durch Polyaddition von Alkylenoxiden an monofunktionelle Starterverbindungen in Gegenwart von Katalysatoren hergestellt werden können. Bevorzugte Starterverbindungen, welche allein oder im Gemisch verwendet werden können, sind Moleküle mit einer Hydroxylgruppe pro Molekül wie Ethanol, Propanol, Butanol, Butyldiglykol. Auf diese Weise werden Monoalkylether mit einer Alkylgruppe mit 1 bis 18 Kohlenstoffatomen, bevorzugt mit 2 bis 6 Kohlenstoffatomen, besonders bevorzugt mit 4 Kohlenstoffatomen, d.h. Monobutylether, erhalten. Bevorzugt werden die erfindungsgemäß eingesetzten Poly(oxyalkylen)polyole aus einem oder mehreren Alkylenoxiden hergestellt. Bevorzugt verwendete Alkylenoxide sind Oxiran, Methyloxiran und Ethyloxiran. Diese können allein oder im Gemisch verwendet werden. Bei Verwendung im Gemisch ist es möglich, die Alkylenoxide statistisch oder blockweise oder beides nacheinander umzusetzen. Bevorzugt wird ein Gemisch aus Propylenoxid und Ethylenoxid zur Herstellung der erfindungsgemäßen Polyoxyalkylendiol-monoalkylether mit einem zahlenmittleren Molekulargewicht von 1000 bis 18000 g/mol, vorzugsweise 1000 bis 3000 g/mol, verwendet.

Zur Herstellung der verwendeten Polyisocyanat-Prepolymeren a) werden die Polyisocyanate und die Polyoxyalkylendiol-monoalkylether im angegebenen NCO / OH-Verhältnis (zwischen 2:1 und 8:1), ggf. in Gegenwart eines Katalysators, erhitzt, bis die Reaktion beendet ist.

Die Polyolkomponente b) erfüllt neben ihrer Funktion als Aufbaukomponente für die Polyurethanmatrix zusätzlich noch die Rolle eines Dispersionsmittels. Bei den zu verwendenden Polyolen kann es sich vorzugsweise um in der Polyurethanchemie an sich bekannte, bei 10 bis 60°C flüssige Polyhydroxypolyether, -polyester, -polythioether, -polyacetale, -polycarbonate, -polyesteramide, -polyamide oder -polybutadiene handeln. Auch bereits Urethan- oder Harnstoffgruppen enthaltende Polyhydroxylverbindungen sowie gegebenenfalls modifizierte natürliche Polyole, wie Rizinusöl, können als Polyolkomponente eingesetzt werden. Selbstverständlich können auch Mischungen der obengenannten Verbindungen, z.B. Mischungen von Polyhydroxypolyethern und -polyestern, eingesetzt werden.

Bei den eingesetzten Polyolen b) handelt es sich bevorzugt um Polyhydroxypolyether, welche auf an sich bekannte Weise durch Polyaddition von Alkylenoxiden an polyfunktionelle Starterverbindungen in Gegenwart von Katalysatoren hergestellt werden können. Bevorzugt werden die erfindungsgemäß eingesetzten Poly(oxyalkylen)polyole aus einer Starterverbindung mit durchschnittlich 3 bis 8 aktiven Wasserstoffatomen und einem oder mehreren Alkylenoxiden hergestellt. Bevorzugte Starterverbindungen sind Moleküle mit drei bis acht Hydroxylgruppen pro Molekül wie Triethanolamin, Glycerin, Trimethylolpropan, Pentaerythrit, Sorbit und Saccharose. Die Starterverbindungen können allein oder im Gemisch, u.a. mit difunktionellen Starterverbindungen wie Diethylenglykol, Dipropylenglykol, Triethylenglykol, Tripropylenglykol, 1,4-Butandiol, 1,6-Hexandiol verwendet werden. Die erfindungsgemäß eingesetzten Polyole b) werden aus einem oder mehreren Alkylenoxiden hergestellt. Bevorzugt verwendete Alkylenoxide sind Oxiran, Methyloxiran und Ethyloxiran. Diese können allein oder im Gemisch verwendet werden. Bei Verwendung im Gemisch ist es möglich, die Alkylenoxide statistisch oder blockweise oder beides nacheinander umzusetzen. Ebenfalls geeignet sind solche höhermolekularen Polyhydroxypolyether, in denen hochmolekulare Polyaddukte bzw. Polykondensate oder Polymerisate in feindisperser, gelöster oder aufgepropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen lässt (wie beispielsweise in DE-AS 1 168 075 beschrieben). Auch durch Vinylpolymerisate modifizierte Polyhydroxylverbindungen, wie sie z.B. durch Polymerisation von Styrol und Acrylnitril in Gegenwart von Polyethern (z.B. gemäß US-PS 3 383 351) erhalten werden, sind für das erfindungsgemäße Verfahren als Polyolkomponente b) geeignet. Vertreter der genannten erfindungsgemäß als Ausgangskomponente b) zu verwendenden Verbindungen sind z.B. im Kunststoff-Handbuch, Band VII _{"}Polyurethane", 3. Auflage ", Carl Hanser Verlag, München / Wien, 1993, Seiten 57 - 67 bzw. Seiten 88 - 90 beschrieben.

Bevorzugt werden als Polyolkomponente b) ein oder mehrere Polyhydroxypolyether eingesetzt, welche eine mittlere Hydroxylzahl von 6 bis 112 und eine formale Funktionalität von 3 bis 8, vorzugsweise von 3 bis 6, aufweisen.

Die an sich langsam ablaufende Gelbildungsreaktion kann gegebenenfalls durch Zusatz von Katalysatoren beschleunigt werden. Dabei können an sich bekannte, die Reaktion zwischen Hydroxyl- und Isocyanatgruppen beschleunigenden Katalysatoren verwendet werden. Insbesondere kommen tertiäre Amine der an sich bekannten Art in Frage, z.B. Triethylamin, Tributylamin, N-Methylmorpholin, N-Ethylmorpholin, N-Cocomorpholin, N,N,N',N'-Tetramethylethylendiamin, 1,4-Diazabicyclo[2.2.2]octan, N-Methyl-N'-dimethylaminoethylpiperazin, -N,N-Dimethylcyclohexylamin, N,N,N',N'-Tetramethyl-1,3-butandiamin, N,N-Dimethylimidazol-ß-phenylethylamin, 1,2-Dimethylimidazol oder 2-Methylimidazol. Auch organische Metallkatalysatoren, insbesondere organische Wismutkatalysatoren, wie z.B. Wismut-(III)- neodecanoat oder organische Zinnkatalysatoren, wie z.B. Zinn-(II)-salze von Carbonsäure wie Zinn-(II)-acetat, Zinn-(II)-octoat, Zinn-(II)-ethylhexoat und Zinn-(II)-laurat und die Dialkylzinnsalze von Carbonsäuren, wie z.B. Dibutylzinndiacetat, Dibutylzinndilaurat, Dibutylzinnmaleat oder Dioctylzinndiacetat können allein oder in Kombination mit den tertiären Aminen verwendet werden. Vorzugsweise werden 0 bis 5 Gew.-%, insbesondere 0,3 bis 2,0 Gew.-%, Katalysator bzw. Katalysatorkombination, bezogen auf die Gelmasse eingesetzt. Weitere Vertreter von Katalysatoren sowie Einzelheiten über die Wirkungsweise der Katalysatoren sind im Kunststoff-Handbuch, Band VII "Polyurethane", 3. Auflage", Carl Hanser Verlag, München / Wien, 1993 auf den Seiten 104 - 11 beschrieben.

Gegebenenfalls mitzuverwendende Füllstoffe können sowohl anorganische als auch organische Füllstoffe sein. Als anorganische Füllstoffe seien beispielhaft genannt: silikatische Mineralien, beispielsweise Schichtsilikate, Metalloxide wie Eisenoxide, insbesondere pyrogen hergestellte Metalloxide wie Aerosile (wie in EP-B-1 125 975 beschrieben), Metallsalze wie Schwerspat, anorganische Pigmente wie Cadmiumsulfid, Zinksulfid sowie Glas, Mikroglaskugeln, Mikroglashohlkugeln, u.a. Verwendet werden können natürliche und synthetische faserförmige Mineralien wie Wollastonit und Glasfasern verschiedener Länge, die gegebenenfalls geschlichtet sein können. Als organische Füllstoffe seien beispielhaft genannt: kristalline Paraffine oder Fette ("Phase - Change - Material") (wie in EP-B-1 277 801 beschrieben), Pulver auf Basis von Polystyrol, Polyvinylchlorid, Harnstoff-Formaldehyd-Massen und/oder Polyhydrazodicarbonamiden (z.B. aus Hydrazin und Toluylendiisocyanat erhaltene). Dabei können z.B. Harnstoff-Formaldehyd-Harze oder Polyhydrazodicarbonamide direkt in einem für die erfindungsgemäße Gelmassen-Herstellung zu verwendenden Polyole hergestellt worden sein. Es können auch Mikrohohlkugeln organischer Herkunft (wie in EP-B-1 142 943 beschrieben) oder Kork (wie in DE 100 24 087 beschrieben) zugefügt werden. Die organischen bzw. anorganischen Füllstoffe können einzeln oder als Gemische verwendet werden. Die Füllstoffe werden, falls überhaupt, der Reaktionsmischung in Mengen von 0 bis zu 50 Gew.-%, vorzugsweise von 0 bis zu 30 Gew.-%, bezogen auf das Gesamtgewicht der Gelmasse zugegeben.

Zu den Hilfs- und Zusatzstoffen, die gegebenenfalls mitverwendet werden, gehören beispielsweise färbende Agenzien, wasserbindende Substanzen, Flammschutzmittel, Weichmacher und/oder einwertige Alkohole.

Als färbende Agenzien können die erfindungsgemäßen Gelmassen z.B. für die Einfärbung von Polyurethanen an sich bekannte Farbstoffe und/oder Farbpigmente auf organischer und/oder anorganischer Basis enthalten, beispielsweise Eisenoxid- und/oder Chromoxidpigmente und Pigmente auf Phthalocyanin- und/oder Monoazo-Basis.

Als wasserbindende Substanzen geeignet sind sowohl gegenüber Wasser hochreaktive Verbindungen, wie z.B. Tris(chlorethyl)orthoformat, wie auch wasserbindende Füllstoffe, z.B. Erdalkalioxide, Zeolithe, Aluminiumoxide und Silikate. Geeignete synthetische Zeolithe sind z.B. unter der Bezeichnung Baylith® im Handel.

Geeignete, gegebenenfalls mitzuverwendende Flammschutzmittel sind beispielsweise Trikresylphophat, Tris-2-chlorethylphosphat, Tris-chlorpropylphosphat und Tris-2,3-dibrompropylphosphat. Außer den bereits genannten halogensubstituierten Phosphaten können auch anorganische Flammschutzmittel, wie Aluminiumoxidhydrat, Ammoniumpolyphosphat, Calciumsulfat, Natriumpolymetaphosphat oder Aminphosphate, z.B. Melaminphosphate verwendet werden.

Als Weichmacher seien beispielsweise Ester von mehrwertigen, vorzugsweise zweiwertigen Carbonsäuren mit einwertigen Alkoholen genannt. Die Säurekomponente solcher Ester kann sich z.B. herleiten von Bernsteinsäure, Isopthalsäure, Trimellitsäure, Phthalsäureanhydrid, Tetra- und/oder Hexahydrophthalsäureanhydrid, Endomethylentetrahydrophthalsäureanhydrid, Glutarsäureanhydrid, Maleinsäureanhydrid, Fumarsäure und/oder dimeren und/oder trimeren Fettsäuren, gegebenenfalls in Mischung mit monomeren Fettsäuren. Die Alkoholkomponente solche Ester kann sich z.B. herleiten von verzweigten und/oder unverzweigten aliphatischen Alkoholen mit 1 bis 20 C-Atomen, wie Methanol, Ethanol, Propanol, Isopropanol, n- Butanol, sek.-Butanol, tert.-Butanol, den verschiedenen Isomeren des Pentylalkohols, Hexylalkohols, Octylalkohols (z.B. 2-Ethyl-Hexanol), Nonylalkohols, Decylalkohols, Laurylalkohols, Myristylalkohols, Cetylalkohols, Stearylalkohols und/oder von natürlich vorkommenden oder durch Hydrierung natürlich vorkommender Carbonsäuren erhältlichen Fett- und Wachsalkoholen. Als Alkoholkomponente kommen auch cycloaliphatische und/oder aromatische Hydroxyverbindungen infrage, beispielsweise Cyclohexanol und dessen Homologe, Phenol, Kresol, Thymol, Carvacrol, Benzylalkohol und/oder Phenylethanol. Als Weichmacher kommen außerdem Ester der obengenannten Alkohole mit Phosphorsäure in Frage. Gegebenenfalls können auch Phosphorsäureester aus halogenierten Alkoholen, wie z.B. Trichlorethylphosphat, eingesetzt werden. Im letzteren Fall kann gleichzeitig mit dem Weichmacher-Effekt ein flammhemmender Effekt erzielt werden. Selbstverständlich können auch gemischte Ester der obengenannten Alkohole und Carbonsäuren eingesetzt werden. Bei den Weichmachern kann es sich auch um sogenannte polymere Weichmacher handeln, z.B. um Polyester der Adipin-, Sebacin- und/oder Phthalsäure. Weiter sind auch Alkylsulfonsäureester des Phenols, z.B. Paraffinsulfonsäurephenylester, als Weichmacher verwendbar.

Weitere, gegebenenfalls mitzuverwendende Zusatzstoffe sind einwertige Alkohole wie Butanol, 2-Ethylhexanol, Octanol, Dodecanol oder Cyclohexanol, die gegebenenfalls zwecks Herbeiführung eines gewünschten Kettenabbruchs mit verwendet werden können.

Die Zusatzstoffe werden, falls überhaupt, der Reaktionsmischung in Mengen von 0 bis zu 25 Gew.%, vorzugsweise von 0 bis zu 10 Gew.%, bezogen auf das Gesamtgewicht der Gelmasse zugegeben. Nähere Angaben über die üblichen Hilfs- und Zusatzstoffe sind der Fachliteratur, beispielsweise dem Kunststoff-Handbuch, Band VII "Polyurethane", 3. Auflage, Carl Hanser Verlag, München / Wien, 1993, Seite 104ff. zu entnehmen.

Die erfindungsgemäßen Gelmassen können z.B. als druckverteilende Elemente verwendet werden. Dazu ist es im Allgemeinen erforderlich, die Gelmassen mit einer teilweisen, einseitigen oder allseitigen Beschichtung, Abdeckung oder Umhüllung zu versehen. Um die druckverteilende Wirkung der Gelmassen möglichst weitgehend zu erhalten, ist es vorteilhaft, hierzu elastische, dehnfähige Umhüllungsmaterialien zu verwenden. Hierfür kommen insbesondere elastische Folien infrage, z.B. Polymerfolien mit gutem zähelastischen Verhalten und hoher Reißdehnung und Reißkraft, beispielsweise Polyurethanfolien. Geeignet als Hüllen sind auch beschichtete elastische textile Flächengebilde wie Gewebe, Gewirke, Gestricke oder Vliese aus natürlichen oder synthetischen organischen oder anorganischen Fasermaterialien mit elastischem Charakter. Flexible Umhüllungen können auch erhalten werden, wenn man die Gelmasse mit einem ein Polyurethan bildenden Zweikomponentenlack überzieht. Bei Anwendungen, bei denen die gezielt einstellbare Haftfähigkeit der Gelmassen genutzt werden soll, z.B. bei Auflagen auf menschliche oder tierische Körperoberflächen, ist nur eine teilweise oder einseitige Beschichtung oder Abdeckung erforderlich. Dies ist insbesondere bei Anwendungen für den einmaligen Gebrauch der Fall.

Die Herstellung von Gelmassen kann prinzipiell auf verschiedene Weise erfolgen. Man kann beispielsweise nach dem one-shot- oder dem Prepolymer - Verfahren arbeiten. Beim one-shot-Verfahren werden alle Komponenten, z.B. Polyole, Polyisocyanate, gegebenenfalls Katalysatoren und gegebenenfalls Füll- und/oder Zusatzstoffe auf einmal zusammengegeben und intensiv miteinander vermischt. Beim Prepolymer - Verfahren stellt man zunächst ein Isocyanat-Prepolymer her, indem man einen Teil der Polyolmenge mit der gesamten, für die Gelbildung vorgesehenen Polyisocyanatmenge umsetzt, fügt dann dem erhaltenen Prepolymer die restliche Menge an Polyol sowie gegebenenfalls Katalysator, Füll- und/oder Zusatzstoffen zu und mischt intensiv. Besonders bevorzugt im Sinne der vorliegenden Erfindung ist das Prepolymer-Verfahren. Hierbei werden die Komponenten b) bis e) zu einer "Polyolkomponente" abgemischt, die dann mit dem Polyisocyanat - Prepolymer a) verarbeitet wird. Die gegebenenfalls mit zu verwendenden Katalysatoren, Füllstoffe sowie Hilfs- und Zusatzmittel werden im Allgemeinen der "Polyolkomponente" zugesetzt, jedoch ist dies nicht zwingend erforderlich, da mit der Polyisocyanat-komponente a) verträgliche Katalysatoren bzw. Füllstoffe bzw. Hilfs- und Zusatzmittel auch dieser einverleibt werden können.

Das bei der Durchmischung der Reaktionskomponenten entstehende Gemisch wird in die jeweilige Form eingebracht. Hierbei erfolgt die Förderung, Dosierung und Mischung von Einzelkomponenten oder Komponentengemischen mit den in der Polyurethan-Chemie an sich bekannten Vorrichtungen. Die Menge des in die Form eingetragenen Gemischs wird im Allgemeinen so bemessen, dass die Formkörper eine Dichte von 1,0 bis 1,2 g/cm³ aufweisen. Insbesondere bei Mitverwendung von mineralischen Füllstoffen können Formkörper mit einer über 1,2 g/cm³ liegenden Dichte resultieren. Als Ausgangstemperatur des in die Form eingebrachten Gemisches wird im Allgemeinen der Bereich von 20 bis 80°C, vorzugsweise 40 bis 60°C, gewählt. Die Temperatur der Form beträgt im Allgemeinen 20 bis 100°C, vorzugsweise 40 bis 60°C. In Abhängigkeit von den Reaktionskomponenten, zugegebenen Katalysatoren und Temperaturführung kann die Zeit bis zur Beendigung der Gelbildung und bis zur Entformung der Formkörper von 1 Minute bis 12 Stunden, bevorzugt von 3 bis 10 Minuten, betragen.

Die erfindungsgemäßen Gelmassen haben die Eigenschaft, sich unter Druck zu deformieren, dabei den Druck zu verteilen, d.h. Druckspitzen zu erniedrigen, und nach dem Entfernen der deformierenden Kraft in ihren Ausgangszustand zurückzugehen. Sie zeichnen sich insbesondere durch eine geringe Härte und hohe Elastizität aus und können daher in vielfältiger Weise angewendet werden, z.B. als Gel-Polster in orthopädischen Schuhen und Sportschuhen, auf Fahrradsätteln, unter Reitsätteln, auf Rollstühlen und Krankenbetten, auf Sitzflächen. Rückenflächen, Kopflehnen und Armlehnen von Sitzmöbeln, insbesondere Bürostühlen, in Matratzen, in Autositzen oder sonstigen Sitzen, auf Operations- oder medizinischen Untersuchungstischen.

Weiterhin können druckverteilende Elemente, die aus einer erfindungsgemäßen Gelmasse mit einer einseitigen Abdeckung oder Beschichtung bestehen und eine hohe Haftfähigkeit aufweisen, insbesondere auf Körperoberflächen von Menschen und Tieren zur Anwendung kommen. Sie finden Verwendung beilspielsweise als Auflagen auf Ellenbogen, Schienbeinen oder Fußoberflächen zur Vermeidung und Verminderung der Auswirkungen von Verletzungen, insbesondere beim Sport, als Auflagen für kosmetische Masken, z.B. Gesichtsmasken, als selbsthaftende Abdeckungen für Verbände im Augen- oder Ohrenbereich zum Zwecke der Befestigung, als Auflagen zur Unterstützung von erschlafftem Gewebe im Brustbereich; als Abpolsterungen unter Pferdesätteln, an Prothesen oder an Windeln zur Verhinderung von Druckstellen. Die Erfindung soll anhand der nachfolgenden Beispiele näher erläutert werden.

### Beispiele

In den Beispielen wurden die folgenden Polyole und NCO-Prepolymere eingesetzt:
Polyol 1: Polyetherpolyol, hergestellt durch Propoxylierung von 1,2-Propylenglykol; OH-Zahl 56, Funktionalität: 2.
Polyol 2: Polyetherpolyol,hergestellt durch Propoxylierung von Glycerin; OH-Zahl 56, Funktionalität: 3.
Polyol 3: Polyetherpolyol, hergestellt durch Propoxylierung von Sorbit und anschließender Ethoxylierung des Alkoxylierungsprodukts; OH-Zahl: 28,5, Funktionalität: 6.
Polyol 4: Polyetherpolyol, hergestellt durch Propoxylierung von Sorbit und anschließender Ethoxylierung des Alkoxylierungsprodukts; OH-Zahl: 100, Funktionalität: 6.

NCO-Prepolymer 1: Prepolymer aus Desmodur^{®} 44V10 (Produkt der Bayer MaterialScience AG; NCO-Gehalt: 31,8 %, mittlere NCO-Funktionalität: 2,8; Viskosität (25°C): 100 mPa.s) und Desmophen^{®} VP.PU 50RE93 (Produkt der Bayer MaterialScience AG; zahlenmittleres Molekulargewicht: 1700 g/mol, Funktionalität: 1) in einem NCO/OH-Verhältnis von 4:1 (theoretischer NCO-Gehalt: 5,8 %).

NCO-Prepolymer 2: Prepolymer aus Desmodur^{®} 44V10 (Produkt der Bayer MaterialScience AG; NCO-Gehalt: 31,8. %, mittlere NCO-Funktionalität: 2,8; Viskosität (25°C): 100 mPa.s) und Desmophen^{®} VP.PU 50RE93 (Produkt der Bayer MaterialScience AG; zahlenmittleres Molekulargewicht: 1700 g/mol, Funktionalität: 1) in einem NCO/OH-Verhältnis von 2 : 1 (theoretischer NCO-Gehalt: 2,2 %).

### Katalysator 1:Bismuth-(III)-neodecanoat (Coscat^{®}83, Fa. C.H. Erbslöh, 47809 Krefeld).

### Durchführung:

Zur Herstellung des Polyisocyanat-Prepolymers wurden Desmodur^{®} 44V10 und Desmophen^{®} VP.PU 50RE93 in einem vorgegebenen NCO / OH-Verhältnis vermischt, das Reaktionsgemisch vier Stunden bei 80°C zur Reaktion gebracht und anschließend auf Raumtemperatur abgekühlt.

Zur Herstellung der Gelmasse wurden zunächst 100 Gew.-Teile Polyol und 1 Teil Katalysator 1 homogenisiert. Dann wurden x Gew.-Teile NCO-Prepolymer (Mischungsverhältnis siehe Tabelle 1) zugegeben und innerhalb von einer Minute vermischt. Die Verfestigung des Gemisches zum Gel begann ca. eine Minute nach der Zugabe des NCO-Prepolymers.Man erhielt eine weich- elastische Gelmasse, deren Formstabilität, Rückstellvermögen und Shore 00-Härte bestimmt wurden.

| **Beispiel** | **1 *** | **2*** | **3*** | **4** | **5** | **6** | **7** |
|---|---|---|---|---|---|---|---|
| Polyol | 1 | 1 | 2 | 2 | 2 | 3 | 4 |
| OH-Zahl. | 56 | 56 | 56 | 56 | 56 | 28 | 100 |
| Funktionalität | 2 | 2 | 3 | 3 | 3 | 6 | 6 |
| Kennzahl | 100 | 60 | 100 | 60 | 49 | 60 | 18 |
| Gew.-Teile NCO- | 81 | 49 | 81 | 48 | 40 | 39 | 26 |
| Prepolymer | | | | | | | |
| NCO-Prepolymer | 1 | 1 | 1 | 1 | 1 | 2 | 1 |
| Formstabilität | ja | nein | ja | ja | ja | ja | ja |
| Rückstellvermögen [sec] | 1 | - | 1 | 1 | 2 | 1 | 3 |
| Shore 00 - Härte | 50 | -(flüssig) | 83 | 39 | 6 | 33 | 1 |

| | | | | | | | |
|---|---|---|---|---|---|---|---|
| * Vergleich | | | | | | | |

Die Vergleichsbeispiele 1 und 2 illustrieren, dass man eine Form - instabile Gelmasse erhält, wenn man durch Kennzahlerniedrigung versucht, eine geringe Gel-Härte (Shore00<40) einzustellen.

## Patentansprüche

1. Gelmassen auf Basis eines Reaktionsgemisches erhältlich aus NCO-Prepolymeren und Polyolkomponenten, **dadurch gekennzeichnet, dass**
a) die eingesetzten NCO-Prepolymere aus Polyisocyanaten mit einer Funktionalität von 2,1 bis 5 und Polyoxyalkylendiol-monoalkylethern mit einem Molekulargewicht von 1000 bis 18000 erhältlich sind, wobei das Verhältnis der NCO-Gruppen zu den OH-Gruppen zwischen 2:1 und 8:1 liegt und
b) die Polyolkomponenten eine mittlere Hydroxylzahl von 6 bis 112 und eine formale Funktionalität von 3 bis 8 aufweisen,
wobei die Kennzahl des Reaktionsgemisches im Bereich von 15 bis 60 liegt.

2. Gelmassen gemäß Anspruch 1, **dadurch gekennzeichnet, dass** das Reaktionsgemisch Füllstoffe in einer Menge von 0 bis 50 Gew.-%, bezogen auf die Gelmasse, enthält.

3. Gelmassen gemäß Anspruch 1, **dadurch gekennzeichnet, dass** das Reaktionsgemisch zusätzlich Katalysatoren in einer Menge von 0 bis 5 Gew.-%, bezogen auf die Gelmasse, enthält.

4. Gelmassen gemäß Anspruch 1, **dadurch gekennzeichnet, dass** das Reaktionsgemisch zusätzlich Hilfs- und Zusatzstoffe in einer Menge von 0 bis 25 Gew.-%, bezogen auf die Gelmasse, enthält.

5. Verfahren zur Herstellung von Gelmassen gemäß Anspruch 1, **dadurch gekennzeichnet, dass**
a) eine oder mehrere NCO-Prepolymere, welche aus Polyisocyanaten mit einer Funktionalität von 2,1 bis 5 und Polyoxyalkylendiol-monoalkylether mit einem Molekulargewicht von 1000 bis 18000 hergestellt werden, wobei das NCO/OH-Verhältnis zwischen 2:1 und 8:1 liegt, mit
b) einer Polyolkomponente bestehend aus einem oder mehreren Polyolen mit einer mittleren Hydroxylzahl von 6 bis 112 und einer formalen Funktionalität von 3 bis 8, in Gegenwart von
c) gegebenenfalls 0-5 Gew.-%, bezogen auf die Gelmasse, eines oder mehrerer Katalysatoren für die Reaktion zwischen Isocyanat- und Hydroxylgruppen und
d) gegebenenfalls 0-50 Gew.-%, bezogen auf die Gelmasse, Füllstoffen, und
e) gegebenenfalls 0-25 Gew.-%, bezogen auf die Gelmasse, Hilfs- und/oder Zusatzstoffen umgesetzt werden,
wobei die Kennzahl des Reaktionsgemisches im Bereich von 15 bis 60 liegt.

6. Verwendung der Gelmassen gemäß Anspruch 1 zur Herstellung von druckverteilenden Auflagen oder Elementen.

## Claims

1. Gel masses based on a reaction mixture obtainable from NCO prepolymers and polyol components, **characterized in that**
a) the NCO prepolymers used are obtainable from polyisocyanates with a functionality of 2.1 to 5 and polyoxyalkylenediol monoalkyl ethers with a molecular weight of 1000 to 18,000, the ratio of NCO groups to OH groups being between 2:1 and 8:1, and
b) the polyol components have a mean hydroxyl number of 6 to 112 and a formal functionality of 3 to 8,
the index of the reaction mixture ranging from 15 to 60.

2. Gel masses according to Claim 1, **characterized in that** the reaction mixture contains fillers in an amount of 0 to 50 wt.%, based on the gel mass.

3. Gel masses according to Claim 1, **characterized in that** the reaction mixture additionally contains catalysts in an amount of 0 to 5 wt.%, based on the gel mass.

4. Gel masses according to Claim 1, **characterized in that** the reaction mixture additionally contains auxiliary substances and additives in an amount of 0 to 25 wt.%, based on the gel mass.

5. Process for the production of gel masses according to Claim 1, **characterized in that**
a) one or more NCO prepolymers prepared from polyisocyanates with a functionality of 2.1 to 5 and polyoxyalkylenediol monoalkyl ether with a molecular weight of 1000 to 18,000, the NCO/OH ratio being between 2:1 and 8:1, are reacted with
b) a polyol component consisting of one or more polyols with a mean hydroxyl number of 6 to 112 and a formal functionality of 3 to 8, in the presence of
c) optionally 0 - 5 wt.%, based on the gel mass, of one or more catalysts for the reaction between isocyanate groups and hydroxyl groups, and
d) optionally 0 - 50 wt.%, based on the gel mass, of fillers, and
e) optionally 0 - 25 wt.%, based on the gel mass, of auxiliary substances and/or additives,
the index of the reaction mixture ranging from 15 to 60.

6. Use of the gel masses according to Claim 1 for the production of pressure-distributing supports or elements.

## Revendications

1. Masses de gel à base d'un mélange réactionnel obtenu à partir de prépolymères NCO et de constituants polyol, **caractérisées en ce que**
a) les prépolymères NCO utilisés sont obtenus à partir de polyisocyanates avec une fonctionnalité de 2,1 à 5 et de polyoxyalkylènediol-monoalkyléthers avec un poids moléculaire de 1000 à 18 000, le rapport des groupes NCO aux groupes OH étant compris entre 2:1 et 8:1 et
b) les constituants polyol présentent un indice hydroxyle moyen de 6 à 112 et une fonctionnalité formelle de 3 à 8,
la constante du mélange réactionnel se trouvant dans le domaine de 15 à 60.

2. Masses de gel selon la revendication 1, **caractérisées en ce que** le mélange réactionnel contient des charges dans une quantité de 0 à 50 % en poids rapportée à la masse de gel.

3. Masses de gel selon la revendication 1, **caractérisées en ce que** le mélange réactionnel contient de plus des catalyseurs dans une quantité de 0 à 5 % en poids rapportée à la masse de gel.

4. Masses de gel selon la revendication 1, **caractérisées en ce que** le mélange réactionnel contient de plus des auxiliaires et des additifs dans une quantité de 0 à 25 % en poids, rapportée à la masse de gel.

5. Procédé pour la préparation de masses de gel selon la revendication 1, **caractérisé en ce que** l'on fait réagir
a) un ou plusieurs prépolymères NCO, lesquels sont préparés à partir de polyisocyanates avec une fonctionnalité de 2,1 à 5 et de polyoxyalkylènediol-monoalkyléthers avec un poids moléculaire de 1000 à 18 000, le rapport NCO/OH étant compris entre 2:1 et 8: 1, avec
b) un constituant polyol constitué d'un ou plusieurs polyols avec un indice hydroxyle moyen de 6 à 112 et une fonctionnalité formelle de 3 à 8, en présence de
c) facultativement 0-5 % en poids, rapporté à la masse de gel, d'un ou plusieurs catalyseurs pour la réaction entre des groupes isocyanate et hydroxyle et
d) éventuellement 0-50 % en poids, rapporté à la masse de gel, de charges, et
e) éventuellement 0-25 % en poids, rapporté à la masse de gel, d'auxiliaires et/ou d'additifs,
la constante du mélange réactionnel se trouvant dans un domaine de 15 à 60.

6. Utilisation des masses de gel selon la revendication 1 pour la préparation de supports ou d'éléments répartissant la pression.
